# EUROPEAN PATENT SPECIFICATION

(11) **EP 2 945 099 B1**
(45) Date of publication and mention of the grant of the patent: **05.06.2019**
(21) Application number: 15164496.0
(22) Date of filing: 21.04.2015
(51) Int. Cl.: G06K 9/20, G06K 9/38, G06K 9/40, G06K 9/72, G06K 9/62

(54) **CHARACTER PRESENCE DETERMINATION SYSTEM AND CHARACTER PRESENCE DETERMINATION METHOD**
ZEICHENPRÄSENZBESTIMMUNGSSYSTEM UND ZEICHENPRÄSENZBESTIMUNGSVERFAHREN
SYSTÈME ET PROCÉDÉ DE DÉTERMINATION DE PRÉSENCE DE CARACTÈRES

(30) Priority: 30.04.2014 JP 2014093397
(43) Date of publication of application: 18.11.2015
(73) Proprietor: Glory Ltd., Himeji-shi, Hyogo 670-8567 (JP)
(72) Inventor: Goto, Masanori, Himeji-shi, Hyogo 670-8567 (JP); Kuroiwa, Motoko, Himeji-shi, Hyogo 670-8567 (JP)
(74) Representative: Jenkins, Peter David

(56) References cited:
- EP-A2- 0 220 032
- WO-A1-91/17521
- US-A- 5 933 531
- US-A1- 2013 259 363
- Burr Settles: "Active Learning Literature Survey", , 26 January 2010 (2010-01-26), XP055219798, Retrieved from the Internet: URL:http://burrsettles.com/pub/settles.act ivelearning.pdf [retrieved on 2015-10-08]
- DUDA R ET AL: "Pattern Classification, chapter 9: Algorithm-Independent Machine Learning", 1 January 2001 (2001-01-01), PATTERN CLASSIFICATION, NEW YORK, JOHN WILEY & SONS, US, PAGE(S) 453 - 515, XP002472161, ISBN: 978-0-471-05669-0 * section 9.5.3 * * figure 9.8, page 481, paragraph 2 *
- CLAIRE MONTELEONI ET AL: "Practical Online Active Learning for Classification", CVPR '07. IEEE CONFERENCE ON COMPUTER VISION AND PATTERN RECOGNITION; 18-23 JUNE 2007; MINNEAPOLIS, MN, USA, IEEE, PISCATAWAY, NJ, USA, 1 June 2007 (2007-06-01), pages 1-8, XP031114667, ISBN: 978-1-4244-1179-5
- SAWAKI M ET AL: "TEXT-LINE EXTRACTION AND CHARACTER RECOGNITION OF DOCUMENT HEADLINES WITH GRAPHICAL DESIGNS USING COMPLEMENTARY SIMILARITY MEASURE", IEEE TRANSACTIONS ON PATTERN ANALYSIS AND MACHINE INTELLIGENCE, IEEE COMPUTER SOCIETY, USA, vol. 20, no. 10, 1 October 1998 (1998-10-01), pages 1103-1109, XP000800260, ISSN: 0162-8828, DOI: 10.1109/34.722625
- David Cohn ET AL: "Improving Generalization with Active Learning* Editor", Machine Learning, 1 January 1994 (1994-01-01), pages 201-221, XP055465858, Retrieved from the Internet: URL:https://link.springer.com/content/pdf/ 10.1007/BF00993277.pdf

## Description

### BACKGROUND OF THE INVENTION

### 1. Field of the Invention

The present invention relates to a character presence determination system capable of determining presence or absence of a character at a predetermined digit position when performing character recognition of a character string constituted of plural digits of characters and printed on a paper sheet.

### 2. Description of the Related Art

Conventionally, when performing character recognition of a character string in a character string image obtained by capturing the character string, the character recognition process is performed so that the number of characters equivalent to the characters constituting the character string is obtained. The number of characters is equivalent to the number of digits in the character string. If it is known previously that a character sting having different number of digits can exist in the character string image, for example, like one among an n-digit character string and an (n+1)-digit character string, in the character recognition, first the number of digits constituting the character string is determined and then each character at each digit position in the character string is recognized. The number of digits constituting the character string is determined as below. First, a position of a predetermined digit (determination digit), which is a digit at which a character may or may not be present depending on the number of digits in the character string in the character string image, is determined, and then characters of a corresponding number of the number of digits constituting the character string is recognized based on whether a character is present at the position of the determination digit. For example, when the character string can have n or n+1 digits, a character string image is acquired, as an (n+1)-digit character string, with reference to the right edge of the character string, and the leftmost digit on the acquired character string image is set as the determination digit. If a character is present in the image of the determination digit, the character string would be an (n+1)-digit character string, and if a character is absent, the character string would be an n-digit character string.

As a method of determining presence or absence of a character at the determination digit, for example, Japanese Patent Application Laid-open No. 2000-306043 discloses a method of determining presence or absence of a character based on a pixel distribution in an image of a predetermined digit. Concretely, in a character string image obtained by capturing a horizontally written character string, positions of each determination digit at which a character may or may not be present are determined. In each of plural determination digits, a pixel distribution of black pixels, which constitute a character within the image of the determination digit, in the direction of the character string (horizontal direction) is determined. If a width of this pixel distribution is shorter than a predetermined threshold value, it means that there is no sufficient character width, and it is determined that a character is absent. In contrast, if this width is equal to or longer than the predetermined threshold value, it is determined that a character is present. By using two determination digits, chances of making an erroneous determination of presence or absence of a character can be suppressed even in a situation where there is soiling or scribbling at the position of one of the determination digits. Prior art document Burr Settles: "Active Learning Literature Survey" published on-line on 26 January 2010 http://burrsettles.com/pub/settles.activelearning.pdf discloses an active learning via stream-based selective sampling scheme where the character confirmed digits are queried samples used to iteratively train the classifier, "the region of uncertainty" is used to decide whether to send a query or not and the final presence determination is performed by the classifier trained on character digits in the image.

In the conventional technique, however, there are situations where an erroneous determination of presence or absence of a character is made because the images of the determination digits have soiling, scribbling, or a background pattern. Concretely, even if the determination is made based on the pixel distribution of plural determination digits, if there is soiling and the like at the position of all the determination digits, an erroneous determination will be made that a character is present. Moreover, when there is only one digit that can be used as a determination digit, like an n-digit character string or an (n+1)-digit character string, the advantage of performing determination by using plural determination digits cannot be achieved, and there is a possibility of performing an erroneous determination of presence or absence of a character.

As another method, it is possible to determine whether a character is present at the position of the determination digit by performing character recognition of the image of the determination digit. Even in this method, there are situations where an erroneous determination is made that a character is absent at the position of the determination digit, although in reality a character is present, due to failure of the character recognition because the image has blurring. Similarly, there are situations where an erroneous determination is made that a character is present at the position of the determination digit, although in reality a character is absent, due to failure of the character recognition because the image has soiling, scribbling, or a background pattern.

### SUMMARY OF THE INVENTION

The present invention has been made in order to solve the problems in the conventional technology. It is an object of the present invention to provide a character presence determination system capable of accurately determining presence or absence of a character at a predetermined digit position when performing character recognition of a character string constituted by characters having plural digits and printed on a paper sheet.

To solve the above problems and to achieve the object, there is provided in accordance with the present invention a character presence determination system according to claim 1.

The above and other objects, features, advantages and the technical and industrial significance of this invention will be better understood by reading the following detailed description of presently preferred embodiments of the invention, when considered in connection with the accompanying drawings.

### BRIEF DESCRIPTION OF DRAWINGS

FIG. 1 is a schematic block diagram of a character presence determination system according to an embodiment of the present invention.
FIGS. 2A to 2C are schematic diagrams for explaining an image acquired from a paper sheet.
FIG. 3 is a schematic diagram for explaining a character recognition evaluation value.
FIGS. 4A and 4B are schematic diagrams for explaining a method of setting a character threshold value and a non-character threshold value.
FIG. 5 is a schematic diagram for explaining a method of calculating a threshold value for determination.
FIG. 6 is a flowchart of a character presence determination process.
FIG. 7 is a schematic diagram for explaining an example of evaluation of presence or absence of a character at a position of a determination digit in a character string image having no blurring.
FIG. 8 is a schematic diagram for explaining an example of evaluation of presence or absence of a character at a position of a determination digit in a character string image having blurring.
FIG. 9 is a schematic diagram for explaining an example of evaluation of presence or absence of a character at a position of a determination digit in a character string image having soiling and blurring.

### EMBODIMENTS

Exemplary embodiments of a character presence determination system according to the present invention are explained below while referring to the accompanying drawings. The character presence determination method according to the present embodiments can be used to determine presence or absence of a character in an image acquired by capturing a predetermined partial region on a printed material in which a character may or may not be present. There is no limitation on the type of the printed material or the type of characters that can be handled. In the following explanation, however, paper sheets on which a 5-digit or a 6-digit identification number has been printed for identifying respective paper sheets have been taken as the targets of determination, and number of digits of the identification number is determined based on whether a character is present at the position of a predetermined digit.

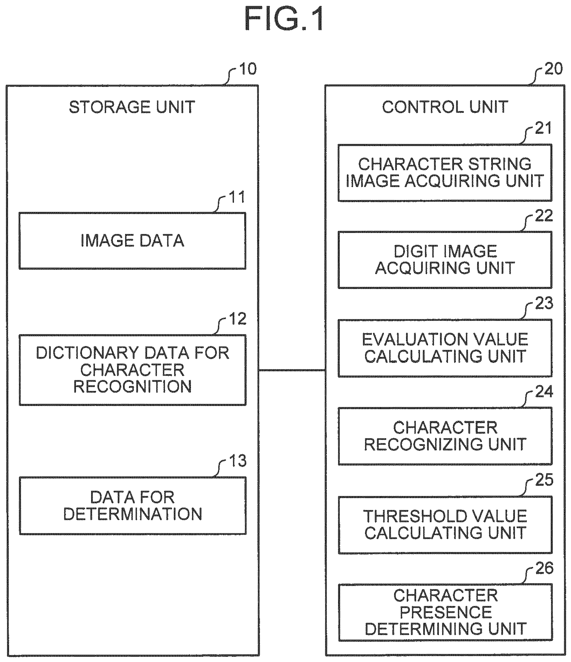

FIG. 1 is a schematic block diagram of a character presence determination system according to an embodiment of the present invention. The character presence determination system includes a storage unit 10 and a control unit 20. The storage unit 10 is a storage device constituted by a hard disk, a nonvolatile semiconductor memory, and the like, and stores therein image data 11, dictionary data for character recognition 12, and data for determination 13.

The control unit 20 includes a character string image acquiring unit 21, a digit image acquiring unit 22, an evaluation value calculating unit 23, a character recognizing unit 24, a threshold value calculating unit 25, and a character presence determining unit 26. The character string image acquiring unit 21 has a function of acquiring an image of a character string as a processing target in a character presence determination process.

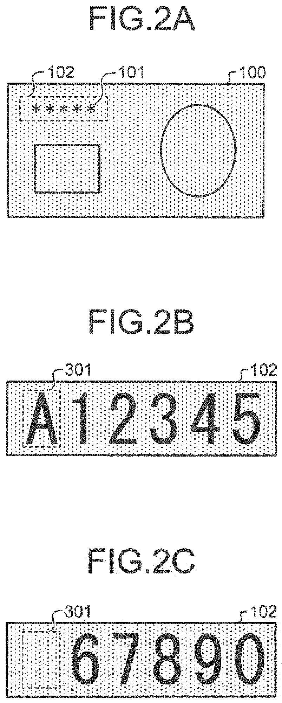

FIGS. 2A to 2C are schematic diagrams for explaining an image acquired by the character string image acquiring unit 21. As show in FIG. 2A, the character string image acquiring unit 21 cuts out, from a paper sheet image 100 on which a 5-digit or a 6-digit identification number 101 has been printed, a character string image 102 of a partial region corresponding to 6 digits with reference to the right edge of the identification number 101. FIG. 2B shows an example of the character string image 102 of a 6-digit identification number 101, and FIG. 2C shows an example of the character string image 102 of a 5-digit identification number 101. In this manner, the character string image acquiring unit 21 cuts out, from the paper sheet image 100, a partial region that corresponds to the 6-digit identification number 101 as the character string image 102 such that the rightmost digit position of the 6-digit identification number 101 and the rightmost digit position of the 5-digit identification number 101 are the same position on the cut out character string image 102. That is, the character string image 102 is acquired such that it includes an image at a position of a digit where the character string may or may not have a character even when the character string has no character in that digit. The character string image 102 acquired by the character string image acquiring unit 21 is stored in the storage unit 10 as the image data 11.

The method of acquiring the paper sheet image 100 is not particularly limited. For example, the character string image acquiring unit 21 may include a line sensor and the like constituting an imaging unit with which the character string image acquiring unit 21 can acquire an image of the actual paper sheet. Alternatively, the character string image acquiring unit 21 may use the paper sheet image 100 that has been acquired by another device.

Likewise, the method of acquiring the character string image 102 is not particularly limited. For example, plural character frames are set such that the character frames encompass characters of the identification number 101 having maximum possible number of digits. A character string frame is set to regulate the positional relation among those character frames. While the paper sheet image 100 is scanned with the character string frame, an evaluation value that represents certainty of inclusion of each character in the identification number 101 within each character frame of the character string frame is calculated. Then, a position of the identification number 101 on the paper sheet image 100 is identified based on the evaluation value, and the character string image 102 can be cut out based on the identified position of the identification number 101. With this method, it is possible to identify the position of the identification number 101 on the paper sheet image 100 and the position of each character constituting the identification number 101. The details of the method are omitted herefrom as the details have been disclosed in International Publication No. WO2012/120587A1. As an alternative method, information relating to a position and a size of the identification number 101 can be prepared previously for each type of the paper sheet, a not-shown paper sheet type recognizing unit can recognize the type of the paper sheet that is being actually used, and the character string image acquiring unit 21 can cut out the character string image 102 from the paper sheet image 100 based on the information relating to the position and the size of the identification number 101 that has been printed on the type of the paper sheet of which type was identified. Alternatively, the character string image 102 can be obtained from another device that actually acquired the character string image 102.

The digit image acquiring unit 22 has a function of acquiring an image of a digit where a character may or may not be present as a determination digit image 301. That is, the determination image 301 is the image of the determination digit that is the processing target in the character presence determination process. The digit image acquiring unit 22 identifies the position of each digit on the character string image 102, cuts out from the character string image 102 a partial region corresponding to a header digit (leftmost digit in the drawing) shown with a dotted rectangle in FIGS. 2B and 2C. The digit image acquiring unit 22 takes this cut out partial region as the determination digit image 301. The determination digit image 301 acquired by the digit image acquiring unit 22 is stored in the storage unit 10 as the image data 11. Moreover, the digit image acquiring unit 22 has a function of acquiring an image of a digit where it has been confirmed that a character is present, that is, a character confirmed digit, as a character confirmed digit image. The digit image acquiring unit 22 cuts out an image of a partial region of each character confirmed digit included in the character string image 102 as the character confirmed digit image. The character confirmed digit images of each character constituting the character string image 102 are stored in the storage unit 10 as the image data 11.

The method of identifying the position of each digit on the character string image 102 is not particularly limited. For example, when the character string image 102 is acquired by using the character frames and the character string frame as explained above, each digit position gets automatically identified at the instant the character string image 102 is acquired. Hence, the image within the character frame corresponding to the header digit can be cut out as the determination digit image 301, and the images within the character frames corresponding to the remaining frames can be cut out as the character confirmed digit images. As an alternative method, information relating to a position and a size of each digit can be prepared previously for the character string image 102, the determination digit image 301 can be acquired from the digit position of the header digit on the leftmost position based on this information relating to the position and the size, and then, the character confirmed digit images can be acquired from the remaining digit positions. Moreover, each digit position on the character string image 102 can be identified by detecting, based on a pixel distribution in the character string image 102, background pixels that continue in a direction (up-down direction in the drawing) perpendicular to the direction of the character string, and the determination digit image 301 and the character confirmed digit images can be acquired.

In the present embodiment, presence or absence of a character is determined with the determination digit image 301 of a single header digit present at the leftmost position in the identification number 101. The digit image acquiring unit 22 can acquire the determination digit image 301 based on the specifications of the type of the paper sheet and the identification number 101. Concretely, when the determination digit is a digit other than the header digit, an image of the determination digit is acquired from that digit position, and if the determination digits are plural, images of all the determination digits are acquired. If there are situations where a part of the character string has a two-line structure and there is a character position at which a character may or may not be present regardless of whether it is the upper line or the lower line, an image at this character position is acquired as the determination digit image. That is, in all character strings regardless of the specifications of each character string, an image at the digit position at which a character may or may not be present is acquired as the determination digit image 301. Subsequently, the character confirmed digit image is acquired from the digit position at which the character is present.

The evaluation value calculating unit 23 has a function of calculating a character recognition evaluation value that represents certainty of a character recognition result when the determination digit image 301 and each character confirmed digit image has been subjected to character recognition. As far as the character recognition evaluation value represents the certainty of the character recognition, the method of calculating the character recognition evaluation value is not particularly limited. For example, when calculating the character recognition evaluation value of the determination digit image 301, Euclidean distances between feature values of the determination digit image 301 and each character image contained in the dictionary data for character recognition 12 are obtained, and the character recognition evaluation value is calculated from those Euclidean distances. The evaluation value calculating unit 23 calculates the character recognition evaluation value from the Euclidean distances between a feature value of the determination digit image 301 and the feature value of each character image contained in the dictionary data for character recognition 12 even if in reality a character is not present in the determination digit image 301. The evaluation value calculating unit 23 calculates the character recognition evaluation value such that shorter the Euclidean distance higher the character recognition evaluation value, and longer the Euclidean distance lower the character recognition evaluation value. That is, shorter the Euclidean distance between feature values of the determination digit image 301 and the character image, higher the certainty of presence of a character and higher the character recognition evaluation value. The evaluation value calculating unit 23 similarly calculates the character recognition evaluation value for each character confirmed digit image contained in the character string image 102.

The character recognizing unit 24 has a function of performing a character recognition process on the determination digit image 301 and each character confirmed digit image acquired by the digit image acquiring unit 22. The character recognizing unit 24 takes the character, for which the evaluation value obtained by the evaluation value calculating unit 23 is maximum, as the character recognition result. The character presence determination system has a function of outputting the determination result relating to presence or absence of a character at the determination digit to an external device and the like. Additionally, a configuration is allowable in which the character recognition result obtained in the character recognizing unit 24 based on the determination result relating to presence or absence of a character are output to an external device in response to a request from the external device.

The threshold value calculating unit 25 has a function of calculating a threshold value for determination that is used to determine presence or absence of a character in the determination digit image 301. The threshold value for determination is calculated by using each character confirmed digit image contained in the character string image 102 from which the determination digit image 301 has been cut out. For example, in the example shown in FIG. 2B, among a character string "A12345", a threshold value for determination is calculated based on character recognition evaluation values of character confirmed digit images of each digit in "12345" other than a determination digit "A". Similarly, in the example shown in FIG. 2C, a threshold value for determination is calculated based on character recognition evaluation values of character confirmed digit images of each digit in a character string "67890". The process performed by the threshold value calculating unit 25 will be explained in detail later.

The character presence determining unit 26 has a function of determining presence or absence of a character in the determination digit image 301 by comparing the character recognition evaluation value of the determination digit image 301 with a character threshold value, a non-character threshold value, and the threshold value for determination. The character threshold value and the non-character threshold value are previously stored in the storage unit 10 as the data for determination 13. The threshold value for determination is calculated by the threshold value calculating unit 25 when performing character presence determination. The process performed by the character presence determining unit 26 will be explained in detail later.

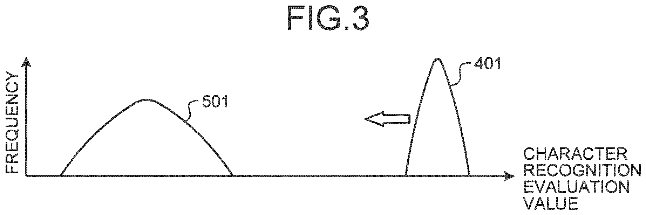

The character threshold value, the non-character threshold value, and the threshold value for determination will be explained. FIG. 3 is a schematic diagram for explaining the character recognition evaluation value. In FIG. 3, the horizontal axis represents the character recognition evaluation value and the vertical axis represents a value corresponding to a frequency of each character recognition evaluation value of the determination digit image 301 and character confirmed digit images. The curve on the right side above the horizontal axis is a character image distribution curve 401 representing a distribution of the character recognition evaluation values, calculated by the evaluation value calculating unit 23, of the determination digit image 301 and the character confirmed digit images that are character images. Moreover, the curve on the left side above the horizontal axis is a non-character image distribution curve 501 representing a distribution of the character recognition evaluation values, calculated by the evaluation value calculating unit 23, of the determination digit image 301 that is a non-character image. It should be noted that, a character image is an image in which one character is present as in the character confirmed digit image. That is, the determination digit image 301 shown in FIG. 2B in which a character is present at the determination digit is a character image. In contrast, a non-character image is an image in which a character is absent. That is, the determination digit image 301 shown in FIG. 2C in which a character is absent at the determination digit is a non-character image.

The character image distribution curve 401 shown on the right side in FIG. 3 is obtained from all the character recognition evaluation values calculated for the character confirmed digit images and the determination digit images 301, each of which is confirmed to include a character, extracted from the paper sheet images 100 acquired by capturing a number of paper sheets each containing the 6-digit identification number 101, and from all the character recognition evaluation values calculated for the character confirmed digit images extracted from the paper sheet images 100 acquired by capturing a number of paper sheets each containing the 5-digit identification number 101. In contrast, the non-character image distribution curve 501 shown on the left side in FIG. 3 is obtained from the character recognition evaluation values calculated for the determination digit images 301, each of which is confirmed to have no character, extracted from the paper sheet images 100 acquired by capturing a number of paper sheets each containing the 5-digit identification number 101.

The character recognition evaluation value is generally high as a character is actually present in the character image; however, the character recognition evaluation value can vary in situations where there is a pattern in the background of the character, or when there is soiling, scribbling, blurring, and the like, in the image. For example, when the character confirmed digit images and the determination digit images 301, which are character images, have blurring, the character image distribution curve 401 shifts toward the left as shown with a hollow arrow in FIG. 3.

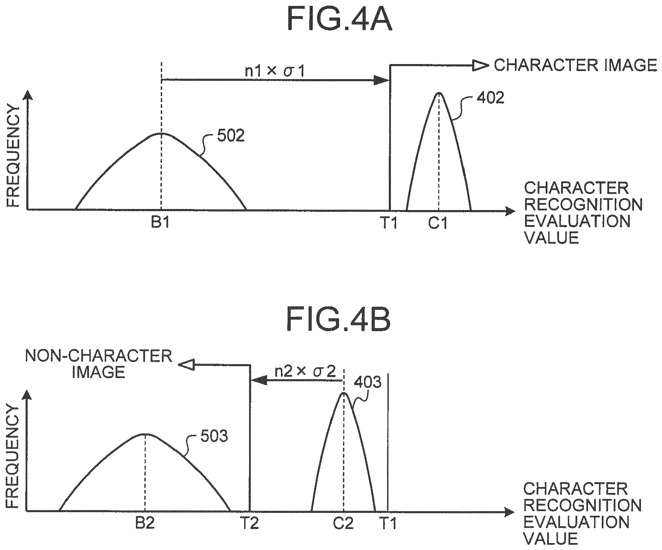

The character threshold value and the non-character threshold value are set previously based on the character image distribution curve 401 and the non-character image distribution curve 501, and are stored in the storage unit 10 as the data for determination 13. FIGS. 4A and 4B are schematic diagrams for explaining a method of setting a character threshold value T1 and a non-character threshold value T2. The threshold values are set by using a value that reflects a trend in the distribution of the character recognition evaluation values. An example where the threshold values are set by using a standard deviation σ is explained below.

First, a method of setting the character threshold value T1 will be explained. A character image distribution curve 402 shown in FIG. 4A is a distribution obtained from the determination digit images 301, which are cut out from the character string images 102 having no blurring and in each of which presence of a character has been confirmed, and the character confirmed digit images, which are cut out from the character string images 102 having no blurring. In contrast, a non-character image distribution curve 502 is a distribution obtained from the determination digit images 301, which are cut out from the character string image 102 having no blurring and in each of which absence of a character has been confirmed. A value C1 represents an average value of the character recognition evaluation values of the determination digit images 301 and the character confirmed digit images that constitute the character image distribution curve 402. A value B1 represents an average value of the character recognition evaluation values of the determination digit images 301 that constitutes the non-character image distribution curve 502. The character threshold value T1 is set as T1=B1+(n1×σ1) based on the average value B1 of the non-character image distribution curve 502 and a standard deviation σ1. Because the positions and the distribution shapes of the character image distribution curve 402 and the non-character image distribution curve 502 vary depending on the background pattern and the like of the paper sheet, a constant n1 is set based on the character image distribution curve 402 and the non-character image distribution curve 502 such that the character threshold value T1, among the character image distribution curve 402 and the non-character image distribution curve 502, is located nearer to the character image distribution curve 402 than the non-character image distribution curve 502. That is, the constant n1 is set such that a situation where the character recognition evaluation value of the determination digit image 301, which is a non-character image, is higher than the character threshold value T1 will not occur. The character threshold value T1 is used to determine that an image is a character image. Therefore, when the character recognition evaluation value of the determination digit image 301 is higher than the character threshold value T1, it is determined that a character is present in the determination digit image 301. In contrast, when the character recognition evaluation value of the determination digit image 301 is equal to or lower than the character threshold value T1, it is determined that presence or absence of a character cannot be determined based on the character threshold value T1, and in this case, a determination is made by using the non-character threshold value T2.

Next, a method of setting the non-character threshold value T2 will be explained. A character image distribution curve 403 shown in FIG. 4B is a distribution obtained from the determination digit images 301, which are cut out from the character string images 102 having blurring and in each of which presence of a character has been confirmed, and the character confirmed digit images, which are cut out from the character string images 102 having blurring. In contrast, a non-character image distribution curve 503 is a distribution obtained from the determination digit images 301, which are cut out from the character string images 102 having blurring and in each of which absence of a character has been confirmed. A value C2 represents an average value of the character recognition evaluation values of the determination digit images 301 and the character confirmed digit images that constitute the character image distribution curve 403. A value B2 represents an average value of the character recognition evaluation values of the determination digit images 301 that constitutes the non-character image distribution curve 503. The non-character threshold value T2 is set as T2=C2-(n2×σ2) based on the average value C2 of the character image distribution curve 403 and a standard deviation σ2. Because the positions and the distribution shapes of the character image distribution curve 403 and the non-character image distribution curve 503 vary depending on the background pattern and the like of the paper sheet, a constant n2 is set based on the character image distribution curve 403 and the non-character image distribution curve 503 such that the non-character threshold value T2, among the character image distribution curve 403 and the non-character image distribution curve 503, is located nearer to the non-character image distribution curve 503 than the character image distribution curve 403. That is, the constant n2 is set such that a situation where the character recognition evaluation value of the determination digit image 301, which is a character image, is lower than the non-character threshold value T2 will not occur. The non-character threshold value T2 is used to determine that an image is a non-character image. When the character recognition evaluation value of the determination digit image 301, for which the determination of presence or absence of a character was not possible with the character threshold value T1, is lower than the non-character threshold value T2, it is determined that a character is absent in the determination digit image 301. In contrast, when the character recognition evaluation value of the determination digit image 301, for which the determination of presence or absence of a character was not possible with the character threshold value T1, is equal to or higher than the non-character threshold value T2, it is determined that presence or absence of a character cannot be determined with the non-character threshold value T2, and in this case, a determination is made by using the threshold value for determination.

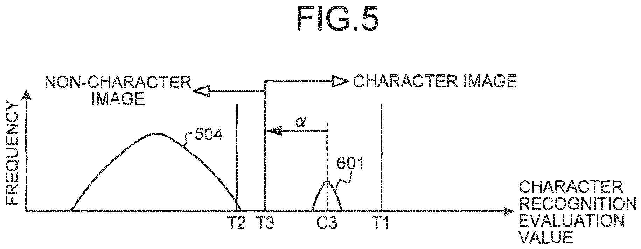

FIG. 5 is a schematic diagram for explaining a method of calculating the threshold value for determination. For example, when it becomes necessary to perform the determination with the threshold value for determination in the character string image 102 shown in FIG. 2B, the threshold value calculating unit 25 calculates the threshold value for determination by using the character recognition evaluation values of each character confirmed digit image contained in the character string image 102. Concretely, when calculating the threshold value for determination for the character string image 102 shown in FIG. 2B, a character recognition evaluation value distribution curve 601 shown in FIG. 5 is obtained from the character recognition evaluation values of each character confirmed digit image of "1", "2", "3", "4", and "5" other than the determination digit image 301. The threshold value for determination T3 is calculated as T3=C3-α from an average value C3 of the character recognition evaluation value distribution curve 601 and an offset value α.

The offset value α is set according to the character recognition evaluation values of the character confirmed digit images when setting the threshold value for determination T3. In other words, the offset value α is set according to the degree of blurring of the character string image 102 because the character recognition evaluation value of the character confirmed digit image represents a value according to the degree of blurring of the character string image 102.

For example, in the 6-digit character string image 102 in which a character is present at the determination digit, a relation between an average value of the character recognition evaluation values of the character confirmed digit images and the character recognition evaluation value of the determination digit image 301 that is a character image is obtained beforehand, and information that indicates this relation is stored in the storage unit 10 as the data for determination 13. When setting the threshold value for determination T3, the offset value α is set, based on the average value C3 of the character recognition evaluation values obtained from the character confirmed digit images and the relation that was obtained beforehand, such that the character recognition evaluation value of the determination digit image 301 is higher than the threshold value for determination T3 even when the determination digit image 301 is a character image. That is, the offset value α is set such that a situation where the character recognition evaluation value of the determination digit image 301 that is a character image is lower than the threshold value for determination T3 will not occur even when the character string image 102 has blurring. The degree of blurring of the determination digit image 301 is represented by the distance from the value C3 to T3 shown in FIG. 5. Higher the degree of blurring, longer the distance. Longer the distance, higher the offset value α, and shorter the distance, lower the offset value α. Moreover, the threshold value for determination T3 is set such that it falls between the character threshold value T1 and the non-character threshold value T2.

In this manner, the threshold value for determination T3 is a threshold value that adapts to and changes with the distribution of the character recognition evaluation values of the character confirmed digit images contained in the character string image 102 that contains the determination digit image 301, and the threshold value for determination T3 changes depending on the degree of blurring of the character string image 102. When the character recognition evaluation value of the determination digit image 301 is higher than the threshold value for determination T3, it is determined that a character is present in the determination digit image 301, and when the character recognition evaluation value of the determination digit image 301 is equal to or lower than the threshold value for determination T3, it is determined that a character is absent in the determination digit image 301.

Although the values B1 and C1 in FIG. 4A, the values B2 and C2 in FIG. 4B and the value C3 in FIG. 5 are average values, it is allowable to use median values instead of the average values for those values.

While the character threshold value T1 and the non-character threshold value T2 are set previously by using a number of paper sheet images 100, the threshold value for determination T3 is calculated at the time of the determination process by using the character string image 102 that is the processing target in the character presence determination process. The information about the character threshold value T1, the non-character threshold value T2, and the offset value α that is used in the calculation of the threshold value for determination T3 is previously stored in the storage unit 10 as the data for determination 13.

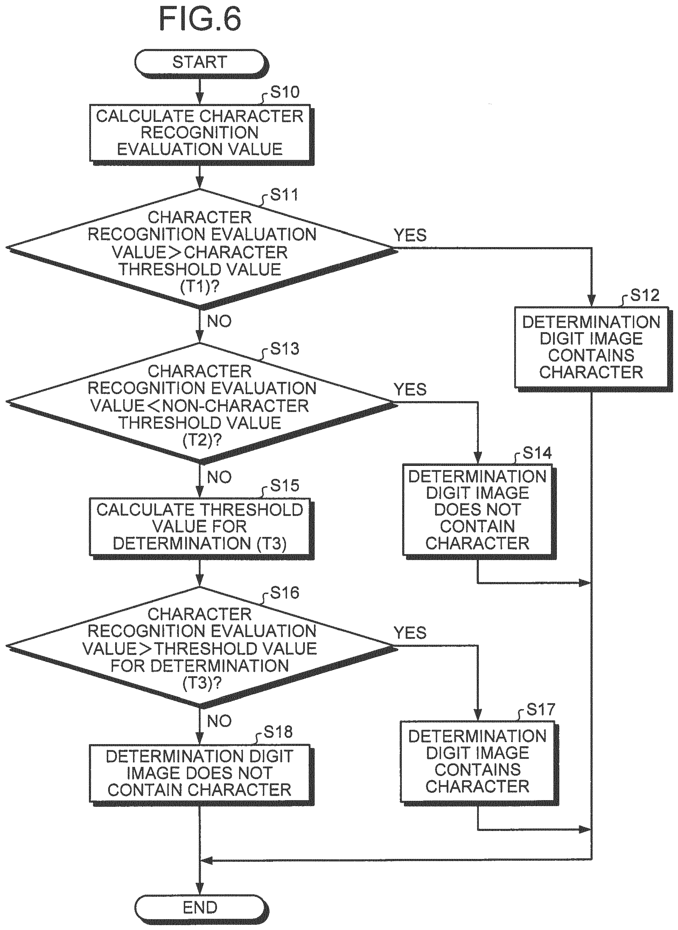

The character presence determination process that is performed by the character presence determination system by using the character threshold value T1, the non-character threshold value T2, and the threshold value for determination T3 is explained in detail below. FIG. 6 is a flowchart of the character presence determination process. The character presence determination process is started after the digit image acquiring unit 22 has acquired the determination digit image 301 that is the processing target in the character presence determination process.

First, the evaluation value calculating unit 23 calculates the character recognition evaluation value of the determination digit image 301 (Step S10).

The character presence determining unit 26 compares the character recognition evaluation value of the determination digit image 301 calculated by the evaluation value calculating unit 23 and the previously set character threshold value T1 (Step S11). When the character recognition evaluation value of the determination digit image 301 is higher than the character threshold value T1 (YES at Step S11), the character presence determining unit 26 determines that a character is present in the determination digit image 301 (Step S12), and the process is terminated.

In contrast, when the character recognition evaluation value of the determination digit image 301 is equal to or lower than the character threshold value T1 (NO at Step S11), the character presence determining unit 26 determines that presence or absence of a character cannot be determined with the character threshold value T1 alone, and subsequently, compares the character recognition evaluation value of the determination digit image 301 with the non-character threshold value T2 (Step S13).

When the character recognition evaluation value of the determination digit image 301 is lower than the non-character threshold value T2 (YES at Step S13), the character presence determining unit 26 determines that a character is absent in the determination digit image 301 (Step S14), and the process is terminated.

In contrast, when the character recognition evaluation value of the determination digit image 301 is equal to or higher than the non-character threshold value T2 (NO at Step S13), the character presence determining unit 26 determines that presence or absence of a character cannot be determined with the non-character threshold value T2. Subsequently, the threshold value calculating unit 25 calculates, as explained above, the threshold value for determination T3 by using the character recognition evaluation values of the character confirmed digit images (Step S15) .

After the threshold value for determination T3 is calculated, the character presence determining unit 26 compares the character recognition evaluation value of the determination digit image 301 and the threshold value for determination T3 (Step S16). When the character recognition evaluation value of the determination digit image 301 is higher than the threshold value for determination T3 (YES at Step S16), the character presence determining unit 26 determines that a character is present in the determination digit image 301 (Step S17), and the process is terminated.

In contrast, when the character recognition evaluation value of the determination digit image 301 is equal to or lower than the threshold value for determination T3 (NO at Step S16), the character presence determining unit 26 determines that a character is absent in the determination digit image 301 (Step S18), and the process is terminated.

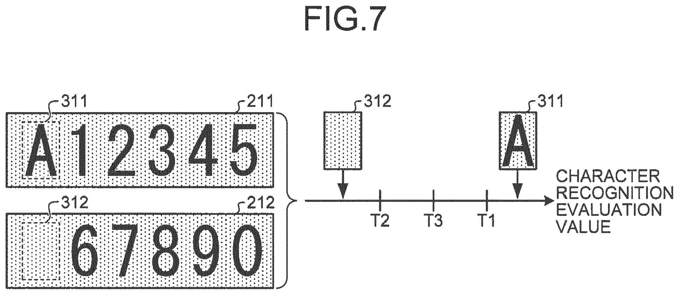

The character presence determination process will be explained in detail below by using a concrete example of a character string image. FIG. 7 is a schematic diagram for explaining an example of evaluation of presence or absence of a character at a position of a determination digit in character string images 211 and 212 having no blurring. A 6-digit character string image 211 containing a determination digit image 311 in which a character is present and a 5-digit character string image 212 containing a determination digit image 312 in which a character is absent are shown on the left side in FIG. 7. A relation between the character recognition evaluation values of the determination digit images 311 and 312, which are cut out from the character string images 211 and 212, and the threshold values T1 to T3 is shown on the right side in FIG. 7. Concretely, on the right side in FIG. 7, positions of the threshold values T1 to T3, a position of the character recognition evaluation value of the determination digit image 311 that is a character image, and a position of the character recognition evaluation value of the determination digit image 312 that is a non-character image are indicated on an axis representing the character recognition evaluation value.

The character recognition evaluation value is calculated from the determination digit image 311 that is cut out from the 6-digit character string image 211 having no blurring (Step S10 shown in FIG. 6) and compared with the character threshold value T1 (Step S11). As shown in FIG. 7, the calculated character recognition evaluation value will be higher than the character threshold value T1 (YES at Step S11), whereby it is determined that the determination digit image 311 is a character image and a character is present in it (Step S12).

In contrast, when the character recognition evaluation value is calculated from the determination digit image 312 that is cut out from the 5-digit character string image 212 having no blurring (Step S10) and compared with the character threshold value T1 (Step S11), as shown in FIG. 7, the character recognition evaluation value of the determination digit image 312 will not be higher than the character threshold value T1 (NO at Step S11). The character recognition evaluation value is then compared with the non-character threshold value T2 (Step S13). Accordingly, the character recognition evaluation value of the determination digit image 312 will be lower than the non-character threshold value T2 (YES at Step S13), whereby it is determined that the determination digit image 312 is a non-character image and a character is absent in it (Step S14).

In this manner, presence or absence of a character in the character string images 211 and 212 having no blurring can be determined by comparing the character recognition evaluation values of the determination digit images 311 and 312 with the character threshold value T1 and the non-character threshold value T2.

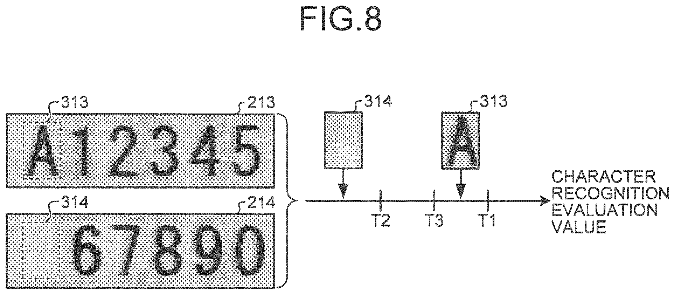

FIG. 8 is a schematic diagram for explaining an example of evaluation of presence or absence of a character at a position of a determination digit in character string images 213 and 214 having blurring. The 6-digit character string image 213 having blurring containing a determination digit image 313 in which a character is present and the 5-digit character string image 214 having blurring containing a determination digit image 314 in which a character is absent are shown on the left side in FIG. 8. A relation between the character recognition evaluation values of the determination digit images 313 and 314 and the threshold values T1 to T3 is shown on the right side in FIG. 8. As shown in FIG. 3, the character recognition evaluation values of the character images decrease when the images are extracted from the character string images 213 and 214 having blurring.

The character recognition evaluation value is calculated from the determination digit image 313 that is cut out from the 6-digit character string image 213 having blurring (Step S10 shown in FIG. 6) and compared with the character threshold value T1 (Step S11). As shown in FIG. 8, when the character recognition evaluation value of the determination digit image 313 is lower than the character threshold value T1 (NO at Step S11) due to the image blurring, it is not possible at this stage to obtain the determination result regarding presence or absence of a character. Subsequently, the character recognition evaluation value of the determination digit image 313 and the non-character threshold value T2 are compared (Step S13). The non-character threshold value T2 has been set such that it is lower than the character recognition evaluation value even if the character recognition evaluation value of the character image decreases due to the image blurring. Hence, as shown in FIG. 8, the character recognition evaluation value of the determination digit image 313 will be higher than the non-character threshold value T2 (NO at Step S13), and it is not possible at this stage to obtain the determination result regarding presence or absence of a character.

Subsequently, the threshold value for determination T3 is calculated based on the character recognition evaluation values of each character confirmed digit image of the character string image 213 shown in FIG. 8 to perform a comparison with the threshold value for determination T3 (Step S15 shown in FIG. 6). The threshold value for determination T3 has been set such that it is lower than the character recognition evaluation value even if the character recognition evaluation value of the character image decreases due to the image blurring. Hence, when the character recognition evaluation value of the determination digit image 313 and the calculated threshold value for determination T3 are compared (Step S16), as shown in FIG. 8, the character recognition evaluation value of the determination digit image 313 is higher than the threshold value for determination T3 (YES at Step S16). Accordingly, it is determined that the determination digit image 313 is a character image and a character is present in it is obtained (Step S17).

In contrast, when the character recognition evaluation value is calculated from the determination digit image 314 that is cut out from the 5-digit character string image 214 having blurring (Step S10) and compared with the character threshold value T1 (Step S11), as shown in FIG. 8, because the character recognition evaluation value of the determination digit image 314 will not be higher than the character threshold value T1 (NO at Step S11), a comparison is subsequently performed with the non-character threshold value T2 (Step S13). As a result of this comparison, because the character recognition evaluation value of the determination digit image 314 will be lower than the non-character threshold value T2 (YES at Step S13), a result that the determination digit image 314 is a non-character image and a character is absent in it is obtained (Step S14).

In this manner, the character threshold value T1 is set such that it is determined that the determination digit image 311 having no blurring is a character image. Even if a determination result for the determination digit image 313 having blurring cannot be obtained in the comparison with the character threshold value T1, a correct determination result that the determination digit image 313 having blurring is a character image can be obtained by using the threshold value for determination T3. The threshold value for determination T3 is set based on the distribution of the character recognition evaluation values of each character confirmed digit contained in the character string image 213 such that it adapts to and changes with the degree of blurring of the determination digit image 313. Accordingly, even if the character recognition evaluation value of the determination digit image 313 decreases due to the image blurring, the threshold value for determination T3 also decreases in accordance with the degree of blurring, and a correct determination result that the determination digit image 313 is a character image is obtained.

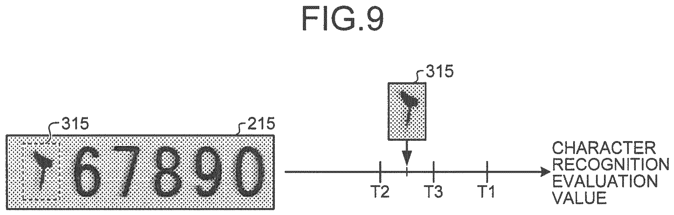

FIG. 9 is a schematic diagram for explaining an example of evaluation of presence or absence of a character at a position of a determination digit in a character string image 215 having blurring and containing a determination digit image 315 having soiling. The 5-digit character string image 215 having blurring and containing the determination digit image 315 having soiling and in which a character is absent is shown on the left side in FIG. 9. A relation between the character recognition evaluation value of the determination digit image 315 and the threshold values T1 to T3 is shown on the right side in FIG. 9. In the character string image 215 having blurring, the character recognition evaluation value decreases. When the determination digit image 315 has soiling and the like, an erroneous determination that a character is present may be obtained due to the soiling and the like. In the example shown in FIG. 9, although the determination digit image 315 is a non-character image, because there is soiling at the position of the determination digit, the character recognition evaluation value of the determination digit image 315 is higher than the same of the determination digit images 312 and 314 that are non-character images shown in FIGS. 7 and 8. Although an example of a situation where the determination digit image 315 has soiling is shown in FIG. 9, even in situations where the determination digit image 315 has scribbling, or the determination digit image 315 contains a background pattern designed with straight or curved lines, the character recognition evaluation value may similarly increase.

When the character recognition evaluation value of the determination digit image 315 is calculated (Step S10 shown in FIG. 6) and compared with the character threshold value T1 (Step S11), as shown in FIG. 9, because the character recognition evaluation value of the determination digit image 315 will not be higher than the character threshold value T1 (NO at Step S11), a comparison is subsequently performed with the non-character threshold value T2 (Step S13). In the example of FIGS. 7 and 8, from the comparison with the non-character threshold value T2, it is determined that the determination digit images 312 and 314 are non-character images and a character is absent in them. In contrast, in the example shown in FIG. 9, if the character recognition evaluation value is higher than the non-character threshold value T2 (NO at Step S13) as the determination digit image 315 has soiling, no determination result can be obtained at this stage.

Therefore, to perform a comparison with the threshold value for determination T3, the threshold value for determination T3 is calculated from the character string image 215 shown in FIG. 9 (Step S15 shown in FIG. 6). The threshold value for determination T3 is set such that, even if the character recognition evaluation value of a non-character image increases due to soiling and the like, the threshold value for determination T3 will be higher than the character recognition evaluation value. Accordingly, when the character recognition evaluation value of the determination digit image 315 and the calculated threshold value for determination T3 are compared (Step S16), as shown in FIG. 9, the character recognition evaluation value of the determination digit image 315 will be lower than the threshold value for determination T3 (NO at step S16). Therefore, it is determined that the determination digit image 315 is a non-character image and a character is absent in it (Step S18).

In this manner, the non-character threshold value T2 is set such that irrespective of whether the determination digit images 312 and 314 have blurring it can be determined that the determination digit images 312 and 314 are non-character images. Even if it cannot be determined that the determination digit image 315 is a non-character image in the comparison with the non-character threshold value T2 because the determination digit image 315 has soling, scribbling, a background pattern, and the like, a correct determination result that the determination digit image 315 is a non-character image can be obtained by using the threshold value for determination T3. The threshold value for determination T3 is set such that it will be higher than the character recognition evaluation value even if the character recognition evaluation value increases because the determination digit image 315 has soling, scribbling, a background pattern, and the like. Accordingly, even if the character recognition evaluation value of the determination digit image 315 increases due to soling, scribbling, a background pattern, and the like, because the threshold value for determination T3 also increases, a correct determination result that the determination digit image 315 is a non-character image can be obtained.

Thus, because the character recognition evaluation values of the determination digit images 311 to 315 at which a character may or may not be present are calculated and the character presence determining unit 26 performs the determination of presence or absence of a character by comparing the calculated character recognition evaluation values with three types of threshold values of the character threshold value T1, the non-character threshold value T2, and the threshold value for determination T3, the determination of presence or absence of a character can be performed correctly. Moreover, because the number of digits contained in the character string image 102 can be determined by using the determination result of presence or absence of a character at the determination digit, erroneous determination that a character is present although a character is actually absent, or a character is absent although a character is actually present is prevented.

As explained above, according to the present embodiment, because the character recognition evaluation value of the image at the digit position at which a character may or may not be present is calculated, and the calculated character recognition evaluation value is compared with the previously set character threshold value and the non-character threshold value, presence or absence of a character can be determined. Moreover, even in a situation where presence or absence of a character cannot be determined with the character threshold value and the non-character threshold value because the image has blurring, soiling, scribbling, a background pattern, and the like, presence or absence of a character is correctly determined by using the threshold value for determination that is calculated from the distribution of the character recognition evaluation values of the character confirmed digit images.

As explained above, the character presence determination system according to the present invention, and the corresponding character presence determination method, are useful in that they can correctly perform the character recognition on a character string by determining the number of digits in an image acquired by capturing a paper sheet even if the number of digits in a character string of an identification number and the like printed on the paper sheet may be different depending on the paper sheet.

According to an aspect of the present invention, a character presence determination system is capable of determining presence or absence of a character in a predetermined digit among a character string constituted by characters having plural digits and printed on a paper sheet. The character presence determination system includes a digit image acquiring unit that acquires, from an image acquired by capturing the character string that contains an image of a determination digit, which is a digit for which it is necessary to perform the determination of presence or absence of a character, the image of the determination digit as a determination digit image, and acquires an image, among the images of the characters constituting the character string, of a character confirmed digit, which is a digit in the character string for which it is confirmed that a character is present, as a character confirmed digit image; an evaluation value calculating unit that calculates character recognition evaluation values that represent certainty of the determination digit image and the character confirmed digit image being a character image; and a character presence determining unit that determines presence or absence of a character in the determination digit based on the character recognition evaluation value of the determination digit image by using three threshold values including a character threshold value that is used to determine that a character is present in the determination digit, a non-character threshold value that is used to determine that a character is absent in the determination digit, and a threshold value for determination that has a value between the character threshold value and the non-character threshold value and that is calculated from the character recognition evaluation value of the character confirmed digit image.

Moreover, according to an another aspect of the present invention, the character presence determining unit determines that a character is present in the determination digit when the character recognition evaluation value of the determination digit image is higher than the character threshold value, determines that a character is absent in the determination digit when the character recognition evaluation value of the determination digit image is lower than the non-character threshold value, and determines, when the character recognition evaluation value of the determination digit image is equal to or lower than the character threshold value as well as equal to or higher than the non-character threshold value, that a character is present in the determination digit when the character recognition evaluation value of the determination digit image is higher than the threshold value for determination and that a character is absent in the determination digit when the character recognition evaluation value of the determination digit image is equal to or lower than the threshold value for determination.

Moreover, according to still another aspect of the present invention, the character presence determination system further includes a threshold value calculating unit that calculates the threshold value for determination based on a distribution of the character recognition evaluation values calculated for the character confirmed digit images.

Moreover, according to still another aspect of the present invention, the threshold value for determination takes a value between a character recognition evaluation value that has decreased because the determination digit image in which a character is present has blurring and a character recognition evaluation value that has increased as if a character is present in the determination digit image in which a character is actually absent.

Moreover, according to still another aspect of the present invention, the character threshold value and the non-character threshold value are previously prepared, and the threshold value for determination is calculated by the threshold value calculating unit when performing the determination of presence or absence of a character.

Moreover, according to still another aspect of the present invention, the threshold value for determination is calculated by using the character confirmed digit images.

Moreover, according to still another aspect of the present invention, the threshold value for determination is calculated when it cannot be determined whether or not a character is present or absent in the determination digit based on the character threshold value and the non-character threshold value.

Moreover, a character presence determination method used by the system of the present invention is for determining presence or absence of a character in a predetermined digit among a character string constituted by characters having plural digits and printed on a paper sheet. The character presence determination method includes acquiring, from an image acquired by capturing the character string that contains an image of a determination digit, which is a digit for which it is necessary to perform the determination of presence or absence of a character, the image of the determination digit as a determination digit image, and acquires an image, among the images of the characters constituting the character string, of a character confirmed digit, which is a digit in the character string for which it is confirmed that a character is present, as a character confirmed digit image; calculating character recognition evaluation values that represent certainty of the determination digit image and the character confirmed digit image being a character image; and determining presence or absence of a character in the determination digit based on the character recognition evaluation value of the determination digit image calculated at the calculating by using three threshold values including a character threshold value that is used to determine that a character is present in the determination digit, a non-character threshold value that is used to determine that a character is absent in the determination digit, and a threshold value for determination that has a value between the character threshold value and the non-character threshold value and that is calculated from the character recognition evaluation value of the character confirmed digit image.

According to the present invention, an image of a determination digit, which is a digit for which it is necessary to perform the determination of presence or absence of a character among a character string constituted by characters having plural digits, is acquired as a determination digit image, and determination of presence or absence of a character in the determination digit is performed by comparing a character recognition evaluation value that represents certainty of the determination digit image being a character image with three threshold values including a character threshold value, a non-character threshold value, and a threshold value for determination. Accordingly, the determination of presence or absence of a character in the determination digit can be performed accurately.

Moreover, according to the present invention, it is determined that a character is present in the determination digit when the character recognition evaluation value is higher than the character threshold value, and it is determined that a character is absent in the determination digit when the character recognition evaluation value is equal to or lower than the character threshold value as well as lower than the non-character threshold value. Moreover, when the character recognition evaluation value is equal to or lower than the character threshold value as well as equal to or higher than the non-character threshold value, the character recognition evaluation value is compared with the threshold value for determination, and it is determined that a character is present in the determination digit when the character recognition evaluation value is higher than the threshold value for determination and that a character is absent in the determination digit when the character recognition evaluation value is equal to or lower than the threshold value for determination.

Moreover, according to the present invention, an image of a character confirmed digit, which is a digit in which it is confirmed that a character is present among a character string constituted by characters having plural digits, is acquired as a character confirmed digit image. Moreover, in accordance with a character recognition evaluation value of this character confirmed digit image, that is, depending on a degree of blurring of a character image of a digit where a character is confirmed to be present, the value of the threshold value for determination, which is calculated when performing the determination of presence or absence of a character, is changed. Accordingly, the determination of presence or absence of a character in the determination digit can be performed accurately without being affected by image blurring,

Moreover, according to the present invention, the threshold value for determination is calculated as follows. That is, for example, when the character recognition evaluation value is equal to or lower than the character threshold value because the determination digit image has blurring in spite of a character being present in the determination digit image, the character recognition evaluation value is made higher than the threshold value for determination, and when the character recognition evaluation value is equal to or higher than the non-character threshold value because the determination digit image has a background pattern, soiling, scribbling, and the like, in spite of a character being absent in the determination digit image, the character recognition evaluation value is made equal to or lower than the threshold value for determination. Accordingly, the determination of presence or absence of a character in the determination digit can be performed accurately.

## Claims

1. A character presence determination system for determining presence or absence of a character at a position of a determination digit, which is a digit at which a character may or may not be present, among plural digits constituting a character string printed on a paper sheet, the character presence determination system comprising:
a digit image acquiring unit (22) that acquires from an image (102) of the character string a determination digit image, where presence or absence of a character is to be determined, and character confirmed digit images from the remaining digit positions;
an evaluation value calculating unit (23) that calculates, for the determination digit image and the character confirmed digit images, character recognition evaluation values each representing certainty of being a character image; and
a character presence determining unit (26) that determines presence or absence of a character at the position of the determination digit by comparing the character recognition evaluation value of the determination digit image with three threshold values including a character threshold value (T1) for determining that a character is present at the position of the determination digit, a non-character threshold value (T2) for determining that a character is absent at the position of the determination digit, and a threshold value for determination (T3) that has a value between the character threshold value (T1) and the non-character threshold value (T2), and
wherein
the character threshold value (T1) and the non-character threshold value (T2) have been set previously based on character recognition evaluation values of character images and non-character images obtained from a plurality of images of other paper sheets, and
the threshold for determination (T3) is calculated from the character recognition evaluation values of the character confirmed digit images calculated by the evaluation value calculating unit (23),
wherein the threshold value for determination (T3) takes a value between a character recognition evaluation value that has decreased because the determination digit image in which a character is present has blurring and a character recognition evaluation value that has increased as if a character is present at the position of the determination digit image in which a character is actually absent,
wherein the threshold value for determination (T3) is set such that it falls between the character threshold value (T1) and the non-character threshold value (T2) and is calculated as T3=C3-α, where (C3) is an average value of a character recognition evaluation value distribution curve (601) obtained from the character confirmed digit images, and α is an offset value that is set according to the degree of blurring of the image (102) of the character string, the offset value increasing with an increase in the degree of blurring and decreasing with a decrease in the degree of blurring, and
wherein when the character recognition evaluation value of the determination digit image is equal to or lower than the character threshold value (T1) and equal to or higher than the non-character threshold value (T2), and thereby it cannot be determined whether or not a character is present or absent at the position of the determination digit by comparing the character recognition evaluation value of the determination digit image with the character threshold value (T1) and the non-character threshold value (T2), it is determined whether a character is present or absent by using the calculated threshold value for determination (T3) .

2. The character presence determination system according to Claim 1, wherein the character presence determining unit (26)
determines that a character is present at the position of the determination digit when the character recognition evaluation value of the determination digit image is higher than the character threshold value (T1),
determines that a character is absent at the position of the determination digit when the character recognition evaluation value of the determination digit image is lower than the non-character threshold value (T2), and
determines, when the character recognition evaluation value of the determination digit image is equal to or lower than the character threshold value (T1) as well as equal to or higher than the non-character threshold value (T2), that a character is present at the position of the determination digit when the character recognition evaluation value of the determination digit image is higher than the threshold value for determination (T3) and that a character is absent at the position of the determination digit when the character recognition evaluation value of the determination digit image is equal to or lower than the threshold value for determination (T3).

3. The character presence determination system according to Claims 1 or 2, further comprising:
a threshold value calculating unit (25) that calculates the threshold value for determination (T3) based on a distribution of the character recognition evaluation values calculated for the character confirmed digit images.

4. The character presence determination system according to Claim 3, wherein the character threshold value (T1) is set based on a distribution of the character recognition evaluation values of the non-character images, and the non-character threshold value (T2) is set based on a distribution of the character recognition evaluation values of the character images, and the threshold value for determination (T3) is calculated by the threshold value calculating unit (25) when performing the determination of presence or absence of a character.

## Patentansprüche

1. Zeichenpräsenzbestimmungssystem zum Bestimmen von Präsenz oder Abwesenheit eines Zeichens in einer Position einer Bestimmungsziffer, welche eine Ziffer ist, an der ein Zeichen anwesend sein kann oder nicht, unter mehrfachen Ziffern, die eine auf ein Papierblatt gedruckte Zeichenfolge konstituieren, wobei das Zeichenpräsenzbestimmungssystem umfasst:
Eine Ziffer-Bilderfassungseinheit (22), die aus einem Bild (102) der Zeichenfolge ein Bestimmungszifferbild erfasst, wo die Präsenz oder Abwesenheit eines Zeichens bestimmt werden soll, und Zeichen bestätigte Zifferbilder ab den restlichen Zifferpositionen;
eine Bewertungswert-Berechnungseinheit (23) die, für das Bestimmungszifferbild und die Zeichen bestätigten Zifferbilder, Zeichenerkennungs-Bewertungswerte berechnet, wobei jeder Gewissheit repräsentiert ein Zeichenbild zu sein; und
eine Zeichenpräsenzbestimmungseinheit (26), welche die Präsenz oder Abwesenheit eines Zeichens in der Position der Bestimmungsziffer durch Vergleichen des Zeichenerkennungs-Bewertungswertes des Bestimmungszifferbildes mit drei Schwellenwerten bestimmt, die einen Zeichenschwellenwert (T1) zum Bestimmen, dass ein Zeichen in der Position der Bestimmungsziffer anwesend ist, ein Nichtzeichen-Schwellenwert (T2) zum Bestimmen, dass ein Zeichen in der Position der Bestimmungsziffer abwesend ist und einen Schwellenwert zur Bestimmung (T3) einschließt, dass einen Wert zwischen dem Zeichenschwellenwert (T1) und dem Nichtzeichen-Schwellenwert (T2) aufweist, und
wobei
der Zeichenschwellenwert (T1) und der Nichtzeichen-Schwellenwert (T2) zuvor auf der Basis von Zeichenerkennungs-Bewertungswerten von Zeichenbildern und Nichtzeichenbildern eingestellt worden sind, die von einer Vielzahl von Bildern anderer Papierblätter erhalten wurden, und
der Schwellenwert für Bestimmung (T3) aus den Zeichenerkennungs-Bewertungswerten der Zeichen bestätigten Zifferbilder durch die Bewertungswert-Berechnungseinheit (23) berechnet wird,
wobei der Schwellenwert für Bestimmung (T3) einen Wert zwischen einem Zeichenerkennungs-Bewertungswert, der sich verringert hat, weil das Bestimmungszifferbild, in dem ein Zeichen anwesend ist, Unschärfe aufweist und einem Zeichenerkennungs-Bewertungswert annimmt, der sich vergrößert hat als ob ein Zeichen in der Position des Bestimmungszifferbildes anwesend ist, in dem ein Zeichen tatsächlich abwesend ist,
wobei der Schwellenwert für Bestimmung (T3) derartig eingestellt ist, dass er zwischen den Zeichenschwellenwert (T1) und den Nichtzeichen-Schwellenwert (T2) fällt und als T3=C3 - α berechnet ist, wobei (C3) ein Durchschnittswert einer Verteilungskurve (601) für Zeichenerkennungs-Bewertungswert ist, die aus den Zeichen bestätigten Zifferbildern erhalten wurde, und α ein Offset-Wert ist, der gemäß dem Grad der Unschärfe des Bildes (102) der Zeichenfolge eingestellt wurde, wobei der Offset-Wert mit einer Erhöhung im Grad der Unschärfe zunimmt und mit einer Verringerung im Grad der Unschärfe abnimmt, und
wobei, wenn der Zeichenerkennungs-Bewertungswert des Bestimmungszifferbildes gleich oder niedriger als der Zeichenschwellenwert (T1) und gleich oder höher als der Nichtzeichen-Schwellenwert (T2) ist, und dadurch nicht bestimmt werden kann, ob oder nicht ein Zeichen in der Position der Bestimmungsziffer anwesend oder abwesend ist, durch Vergleichen des Zeichenerkennungs-Bewertungswertes des Bestimmungszifferbildes mit dem Zeichenschwellenwert (T1) und des Nichtzeichen-Schwellenwertes (T2), durch Verwendung des berechneten Schwellenwertes für Bestimmung (T3) bestimmt wird, ob ein Zeichen anwesend oder abwesend ist.

2. Zeichenpräsenzbestimmungssystem nach Anspruch 1, wobei die Zeichenpräsenzbestimmungseinheit (26) bestimmt, dass ein Zeichen in der Position der Bestimmungsziffer anwesend ist, wenn der Zeichenerkennungs-Bewertungswert des Bestimmungszifferbildes höher als der Zeichenschwellenwert (T1) ist,
bestimmt, dass ein Zeichen in der Position der Bestimmungsziffer abwesend ist, wenn der Zeichenerkennungs-Bewertungswert des Bestimmungszifferbildes niedriger als der Nichtzeichen-Schwellenwert (T2) ist, und
bestimmt, wenn der Zeichenerkennungs-Bewertungswert des Bestimmungszifferbildes gleich oder niedriger als der Zeichenschwellenwert (T1) sowie gleich oder höher als der Nichtzeichen-Schwellenwert (T2) ist, dass ein Zeichen in der Position der Bestimmungsziffer anwesend ist, wenn der Zeichenerkennungs-Bewertungswert des Bestimmungszifferbildes höher als der Schwellenwert für Bestimmung (T3) ist und, dass ein Zeichen in der Position der Bestimmungsziffer abwesend ist, wenn der Zeichenerkennungs-Bewertungswert des Bestimmungszifferbildes gleich oder niedriger als der Schwellenwert für Bestimmung (T3) ist.

3. Zeichenpräsenzbestimmungssystem nach Ansprüchen 1 oder 2, ferner umfassend:
Eine Schwellenwert-Berechnungseinheit (25), die den Schwellenwert für Bestimmung (T3) auf Basis einer Verteilung der Zeichenerkennungs-Bewertungswerte berechnet, die für Zeichen bestätigten Zifferbilder berechnet wurden.

4. Zeichenpräsenzbestimmungssystem nach Anspruch 3, wobei der Zeichenschwellenwert (T1) auf Basis einer Verteilung der Zeichenerkennungs-Bewertungswerte der Nichtzeichenbilder eingestellt ist, und der Nichtzeichen-Schwellenwert (T2) auf Basis einer Verteilung der Zeichenerkennungs-Schwellenwerte der Zeichenbilder eingestellt ist, und der Schwellenwert für Bestimmung (T3) von der Schwellenwert-Berechnungseinheit (25) berechnet wird, wenn die Bestimmung von Präsenz oder Abwesenheit eines Zeichens durchgeführt wird.

## Revendications

1. Système de détermination de présence de caractère servant à déterminer la présence ou l'absence d'un caractère au niveau d'une position d'un caractère numérique de détermination, qui est un caractère numérique au niveau duquel un caractère peut ou peut ne pas être présent, parmi plusieurs caractères numériques constituant une chaîne de caractères imprimée sur une feuille de papier, le système de détermination de présence de caractère comportant :
une unité d'acquisition d'image de caractère numérique (22) qui acquiert à partir d'une image (102) de la chaîne de caractères une image de caractère numérique de détermination, où la présence ou l'absence d'un caractère doit être déterminée, et des images de caractère numérique de caractère confirmé parmi les positions de caractère numérique restantes ;
une unité de calcul de valeur d'évaluation (23) qui calcule, pour l'image de caractère numérique de détermination et les images de caractère numérique de caractère confirmé, des valeurs d'évaluation de reconnaissance de caractère représentant chacune la certitude d'être une image de caractère ; et
une unité de détermination de présence de caractère (26) qui détermine la présence ou l'absence d'un caractère au niveau de la position du caractère numérique de détermination en comparant la valeur d'évaluation de reconnaissance de caractère de l'image de caractère numérique de détermination par rapport à trois valeurs de seuil comprenant une valeur de seuil de caractère (T1) servant à déterminer qu'un caractère est présent au niveau de la position du caractère numérique de détermination, une valeur de seuil de non-caractère (T2) servant à déterminer qu'un caractère est absent au niveau de la position du caractère numérique de détermination, et une valeur de seuil de détermination (T3) qui a une valeur entre la valeur de seuil de caractère (T1) et la valeur de seuil de non-caractère (T2), et
dans lequel
la valeur de seuil de caractère (T1) et la valeur de seuil de non-caractère (T2) ont été définies précédemment sur la base de valeurs d'évaluation de reconnaissance de caractère des images de caractère et des images de non-caractère obtenues en provenance d'une pluralité d'images d'autres feuilles de papier, et
le seuil de détermination (T3) est calculé à partir des valeurs d'évaluation de reconnaissance de caractère des images de caractère numérique de caractère confirmé calculées par l'unité de calcul de valeur d'évaluation (23),
dans lequel la valeur de seuil de détermination (T3) prend une valeur entre une valeur d'évaluation de reconnaissance de caractère qui a diminué parce que l'image de caractère numérique de détermination dans laquelle un caractère est présent a du flou et une valeur d'évaluation de reconnaissance de caractère qui a augmenté comme si un caractère était présent au niveau de la position de l'image de caractère numérique de détermination dans laquelle un caractère est en fait absent,
dans lequel la valeur de seuil de détermination (T3) est définie de telle sorte qu'elle tombe entre la valeur de seuil de caractère (T1) et la valeur de seuil de non-caractère (T2) et est calculée sous la forme de T3=C3 - α, où (C3) est une valeur moyenne d'une courbe de distribution de valeurs d'évaluation de reconnaissance de caractère (601) obtenue à partir des images de caractère numérique de caractère confirmé, et α est une valeur de décalage qui est définie en fonction du degré de flou de l'image (102) de la chaîne de caractères, la valeur de décalage augmentant en fonction d'une augmentation du degré de flou et diminuant en fonction d'une diminution du degré de flou, et
dans lequel, quand la valeur d'évaluation de reconnaissance de caractère de l'image de caractère numérique de détermination est égale ou inférieure à la valeur de seuil de caractère (T1) et égale ou supérieure à la valeur de seuil de non-caractère (T2), et que de ce fait il est impossible de déterminer si oui ou non un caractère est présent ou absent au niveau de la position du caractère numérique de détermination en comparant la valeur d'évaluation de reconnaissance de caractère de l'image de caractère numérique de détermination par rapport à la valeur de seuil de caractère (T1) et la valeur de seuil de non-caractère (T2), il est déterminé si un caractère est présent ou absent en utilisant la valeur de seuil de détermination (T3) ayant été calculée.

2. Système de détermination de présence de caractère selon la revendication 1, dans lequel l'unité de détermination de présence de caractère (26)
détermine qu'un caractère est présent au niveau de la position du caractère numérique de détermination quand la valeur d'évaluation de reconnaissance de caractère de l'image de caractère numérique de détermination est supérieure à la valeur de seuil de caractère (T1),
détermine qu'un caractère est absent au niveau de la position du caractère numérique de détermination quand la valeur d'évaluation de reconnaissance de caractère de l'image de caractère numérique de détermination est inférieure à la valeur de seuil de non-caractère (T2), et
détermine, quand la valeur d'évaluation de reconnaissance de caractère de l'image de caractère numérique de détermination est égale ou inférieure à la valeur de seuil de caractère (T1) ainsi qu'égale ou supérieure à la valeur de seuil de non-caractère (T2), qu'un caractère est présent au niveau de la position du caractère numérique de détermination quand la valeur d'évaluation de reconnaissance de caractère de l'image de caractère numérique de détermination est supérieure à la valeur de seuil de détermination (T3) et qu'un caractère est absent au niveau de la position du caractère numérique de détermination quand la valeur d'évaluation de reconnaissance de caractère de l'image de caractère numérique de détermination est égale ou inférieure à la valeur de seuil de détermination (T3).

3. Système de détermination de présence de caractère selon la revendication 1 ou la revendication 2, comportant par ailleurs :
une unité de calcul de valeur de seuil (25) qui calcule la valeur de seuil de détermination (T3) sur la base d'une distribution des valeurs d'évaluation de reconnaissance de caractère calculées pour les images de caractère numérique de caractère confirmé.

4. Système de détermination de présence de caractère selon la revendication 3, dans lequel la valeur de seuil de caractère (T1) est définie sur la base d'une distribution des valeurs d'évaluation de reconnaissance de caractère des images de non-caractère, et la valeur de seuil de non-caractère (T2) est définie sur la base d'une distribution des valeurs d'évaluation de reconnaissance de caractère des images de caractère, et la valeur de seuil de détermination (T3) est calculée par l'unité de calcul de valeur de seuil (25) lors de la réalisation de la détermination de la présence ou de l'absence d'un caractère.
